Europäisches Patentamt

European Patent Office

Office européen des brevets

(11) Publication number: **0 059 733**
**B1**

# EUROPEAN PATENT SPECIFICATION

(45) Date of publication of patent specification: **27.11.85**

(21) Application number: **81902542.0**

(22) Date of filing: **04.09.81**

(86) International application number:
**PCT/US81/01189**

(87) International publication number:
**WO 82/01069 01.04.82 Gazette 82/09**

(51) Int. Cl.⁴: **G 01 M 15/00**

## (54) NEEDLE POSITION SENSING SYSTEM FOR NEEDLE OR POPPET VALVE FUEL INJECTORS.

(30) Priority: **15.09.80 US 187171**
**09.03.81 US 241682**
**20.07.81 US 285286**

(43) Date of publication of application:
**15.09.82 Bulletin 82/37**

(45) Publication of the grant of the patent:
**27.11.85 Bulletin 85/48**

(84) Designated Contracting States:
**DE FR GB SE**

(56) References cited:
**EP-A-0 019 031**
**GB-A- 754 917**
**SU-A- 742 742**
**US-A-3 344 663**
**US-A-3 412 602**
**US-A-3 828 247**
**US-A-3 942 366**
**US-A-4 096 841**
**US-A-4 109 518**
**US-A-4 206 635**

(73) Proprietor: **WOLFF, George D.**
**P.O. Box 9407**
**Winter Haven, FL 33880 (US)**

(72) Inventor: **WOLFF, George D.**
**P.O. Box 9407**
**Winter Haven, FL 33880 (US)**

(74) Representative: **Moss, Bernard Joseph et al**
**D. Young & Co. 10 Staple Inn**
**London, WC1V 7RD (GB)**

(56) References cited:
**THE ENGINEER, vol. 224, no. 5839, December 22, 1967 LONDON (GB) B.C. COLEMAN: "Use of Miniature Transducer for Fuel Injection Testing", pages 817-818**

Courier Press, Leamington Spa, England.

# Description

## Background of the Invention

### 1. *Field of the Invention*

The present invention relates generally to internal combustion engines, and more particularly relates to techniques for sensing the position of a needle or poppet valve in order to maximize the efficiency of engine operation and reduce unwanted exhaust emissions.

### 2. *Description of the Prior Art*

Diesel engines typically employ needle or poppet valves which are open and closed at timed intervals to inject desired amounts of fuel into the cylinder for combustion. In order to maximize fuel efficiency and minimize undesirable exhaust emissions, it is necessary to detect the opening of the valve in relation to the engine crankshaft position. The opening of the valve can then be set or controlled in timed relationship to the engine crankshaft position.

Known valves generally include a needle or poppet and a related seat. When the needle is in contact with the seat, the valve is closed. When the needle or poppet is lifted off the seat, the valve opens and fuel is metered through orifices into the engine cylinder. The initial displacement between the needle or valve and its corresponding seat determine the beginning of injection. It is necessary to time or control the initial displacement of the needle or valve from the seat relative to the rotational position of the engine crankshaft. In order to maximize fuel efficiency, and at the same time reduce undesirable emissions.

It is known to determine timing by reference to visual markings on the engine flywheel. Techniques have also been developed to electronically measure the injection timing by determining needle position using inductive or capacitor devices positioned within a fuel injector nozzle holder; see Patents US—A—4,066,059 and US—A—4,096,841.

Creative Tool Company of Lyons, Illinois presently manufactures a product known as the "Diesel Tac-Time CT 4000". This device utilizes a split-nut transducer which is installed on an engine cylinder fuel line at either the injection pump or at the nozzle. Mechanical strains produced by pulses of fuel through the fuel line create a mechanical displacement of the line which is detected by the transducer.

US—A—3412602 discloses a fuel injector for a diesel engine having a needle valve 14 housed in a chamber in the fuel injector body and biassed towards a closed position by a spring 66. A Hall effect sensor plate 20 is housed in the fuel injector body in parallel to the needle valve 14. Thus the movement of the needle valve 14 is parallel to the Hall effect sensor plate 20. However as a Hall effect sensor senses the magnetic flux density of a magnetic field perpendicular or normal to itself, the magnetic field change in this known arrangement will be small and not even close to linear with consequent reduction in the accuracy of the sensed needle position. Additionally the signal produced by the sensor will be weak.

EP—A—0019031 discloses a fuel injector having a needle valve 11 housed in a chamber in the fuel injector body and biassed towards a closed position by a spring 17 housed in a chamber 26. A passageway 27 extends in the fuel injector body to open to the exterior thereof at 33 and to open at its other end into the chamber 26. A Hall effect sensor 29 is located in the chamber 26 in axial extension of the passageway end opening into the chamber 26. This sensor 29 is attached to the outside end of a pin or bolt 23 and is thus exposed in the chamber 26 to fuel pressure fluctuations leading to cavitation erosion damage to and subsequent failure of the sensor in a relatively short time. Additionally in this known arrangement the chamber 26 is in direct communication with the passageway 27 along and around the lead wires attached to the sensor 29 with consequent difficulty in preventing fuel leaking from the chamber 26 to the exterior of the fuel injector via the passageway 27.

According to the present invention there is provided a fuel injector for delivering fuel to an internal combustion engine, including a fuel injector body incorporating a needle valve or poppet valve displaceable between closed and open positions for controlling fuel delivery, which needle valve or poppet valve is housed in a chamber in the injector body and biassed towards the closed position by biassing means located in the chamber, and means for sensing the position of the needle valve or poppet valve, which position sensing means includes a Hall effect sensor characterised in that a passageway extends in the body to open at one end to the exterior thereof and either to open at the other end into a tubular holder provided in axial extension of the other passageway end opening into the chamber, or to terminate short of and immediately adjacent to the chamber, and the Hall effect sensor is either located in said holder or located in the passageway at the end thereof terminating short of and immediately adjacent to the chamber.

The fuel injector or poppet fuel injection valve (collectively referred to as "fuel injection means") receives the position sensor to permit dynamic measurement of the needle or valve position, thus permitting determination of the beginning of injection point for engine timing.

The Hall effect sensor comprises a header of an electrically insulating material having opposed first and second surfaces and plural conductive leads, each lead separately coupled to the first surface of the header. Sensing means, in the form of the Hall effect detector, is mounted upon the second surface of the header for detecting a magnetic field and changes therein responsive to movement of the fuel injection means (such as the needle or poppet valve). Metallization means between the first and second surfaces provide interconnection between the leads and the sensor. The leads, header and detector are all encapsulated, and are dimensioned for insertion into and out of a passageway in fuel injection apparatus including the fuel injection means. The sensor is dimensioned to pass through a passageway in the fuel injector apparatus, with the insulating encapsulating material and the header defining means which contact the passageway through which the sensor apparatus is positioned.

Description of the Drawings

This invention is pointed out with particularity in the appended claims. However, other objects and advantages together with the operation of the invention may be better understood by reference to the following detailed description together with the following illustrations, wherein:

FIG. 1 is a partially cut away sectional view of a fuel injector including a needle position indicator according to the present invention.

FIG. 2 is a partially cut away perspective view particularly illustrating a Hall effect sensor and mounting bracket in accordance with the present invention.

FIG. 3 is a sectional view of a second embodiment of the Hall effect sensor and its mounting bracket.

FIG. 4 is a sectional view of a fuel injector capable of receiving a needle position sensor.

FIG. 5 is a sectional view of one embodiment of the sensor holder which is positionable within the nozzle holder illustrated in FIG. 4.

FIG. 6 is a sectional view of a poppet fuel injector valve which has been modified in accordance with the present invention.

FIG. 7 is a sectional view of the poppet fuel injector valve illustrated in FIG. 6, taken along section line A—A.

FIG. 8—10 illustrate top plan views of steps during the manufacture of one embodiment of a sensor in accordance with the present invention.

FIG. 11 is a top view of the sensor of FIGS. 8—10, with the encapsulating resin omitted.

FIG. 12 is a side view of FIG. 11.

FIG. 13 is a bottom view of FIG. 11, showing the arrangement of the Hall effect chip in the sensor.

FIG. 14 illustrates a portion of a fuel injector for an internal combustion engine, as employing the sensor of FIGS. 8—13.

FIG. 15 and 16 are side and bottom views, respectively, of the encapsulated sensor of FIGS. 8—13.

Detailed Description of the Invention

In order to better illustrate the advantages of the invention and its contributions to the art, the various mechanical and electrical features of a first preferred embodiment of a non-removable version of the invention will now be described in detail.

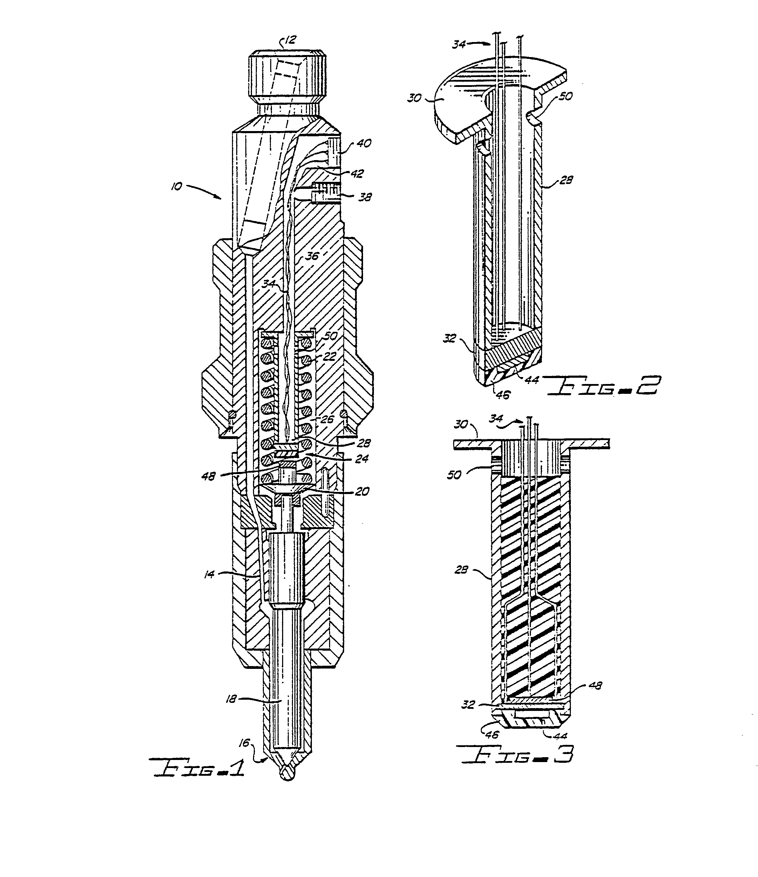

Referring to FIGS. 1 and 2, a commonly used fuel injector (10) is illustrated. Fuel injector (10) is of a conventional design and is commercially available from fuel injection equipment manufacturers such as Robert Bosch. A high pressure fuel line is coupled to inlet port (12) of fuel injector (10). Pressurized fuel is transferred from inlet port (12) through passageway (14) into the lower section of fuel injector (10) in which a needle valve is positioned. The needle valve includes a seat generally indicated by reference number (16) and a needle (18). A spring seat (20) is held by the spring against the upper section of needle (18) and forms an upper extension of needle (18). Spring seat (20) moves in synchronization with the needle (18).

A cylindrical spring (22) includes a central spring cavity or passageway (24). Spring (22) is positioned within a cylindrical cavity (26) in fuel injector (10). In the commercially manufactured version of fuel injector (10), the upper end of the spring (22) contacts the upper end of cavity (26) while the lower end of spring (22) contacts spring seat (20). In this manner spring (22) exerts a biasing force against the upper end of needle (18) to bias the lower end of needle (18) against needle seat (16) to maintain the needle valve in the closed position. Fuel pressure at an appropriate level within passageway (14) exerts a force on needle 18 and displaces the entire needle assembly including needle (18) and spring seat (20) upward. Upward displacements of needle (18) are generally on the order of 0.4 to 0.7 millimeters.

In the preferred embodiment of the first invention, a cylindrical mounting bracket (28) includes a body which descends downward through the central spring cavity (24) of spring (22). In the embodiment illustrated the body of mounting bracket (28) is approximately 25 millimeters long and has a diameter of 4.3 millimeters. Mounting bracket (28) also includes a flange (30) on the upper surface. Flange (30) is positioned between the upper surface of cavity (26) and the upper end of spring (22). The upper biasing force exerted by spring (22) against the flange (30) which contacts the upper surface of cavity (26) serves to maintain mounting bracket (28) in a fixed position within the spring cavity (24) of spring (22).

A commercially available three lead header (32) is coupled to the lower portion of the body of mounting bracket (28). Header (32) is commercially available TO-46 device which has been modified by removing the flange which surrounds the commercially available version. Two of the leads of header (32) pass through insulators in the header and penetrate the lower surface of the device. The third lead is a ground lead which is coupled directly to the metallic body of the header. Header (32), utilized in the preferred embodiment of the first invention, is manufactured by Airpax Electronics Company of Cambridge, Maryland. The three electrical leads (34) extending upward from header (32) are fabricated from number thirty Teflon coated wire. Electrical leads (34) are routed upward through the body of mounting bracket (28) and pass through passageway (36) which forms a fuel leakage path by connecting the interior of cavity (26) through the hole (50) in mounting bracket (28) to fuel discharge port (38). To permit electrical leads (34) to extend further upward and to be coupled to receptacle (40), a passageway extension (42) is machined into the body of fuel injector (10).

A Hall effect sensor (44) is coupled to the lower surface of header (32). Sensor (44) is manufactured on a single 1.245 mm by 1.270 mm integrated circuit chip by Sprague Electric Company of Concord, New Hampshire, and is designated by Model No. UGN-3501-M. This commercially available Hall effect sensor includes a voltage regulator, a Hall effect cell and an amplifier. A layer of epoxy encapsulation (46) surrounds the lower exposed surface of sensor (44). The interior body of mounting bracket (28) is typically filled with a potting compound, such as epoxy material, to mechanically secure electrical leads (34).

A samarium cobalt permanent magnet (48) is adhesively secured to the top surface of spring seat (20). Magnet (48) is approximately two millimeters thick and is fabricated in a size which permits it to be positioned on the upper cylindrical surface of spring holder (20) without extending beyond the perimeter of this device. Magnet (48) is small, but produces a magnetic flux density of about 1200 Gauss. The upper surface of magnet (48) is separated from the lower surface of epoxy encapsulation (46) by a spacing of about one millimeter when the needle valve is in the resting or unactuated position. When needle (18) is displaced upward by about 0.4 to 0.7 millimeters as the needle valve is opened, the magnetic flux density in the vicinity of Hall effect sensor (44) is substantially changed, causing the output voltage of this device to change linearly in proportion to the displacement of needle (18). This change in output voltage is transmitted by leads (34) to receptacle (40). A monitoring device may be coupled to receptacle (40) and indicates both the upward and the downward displacements of needle (18) which corresponds to either an increase or a decrease of the magnetic flux design within the cavity (26).

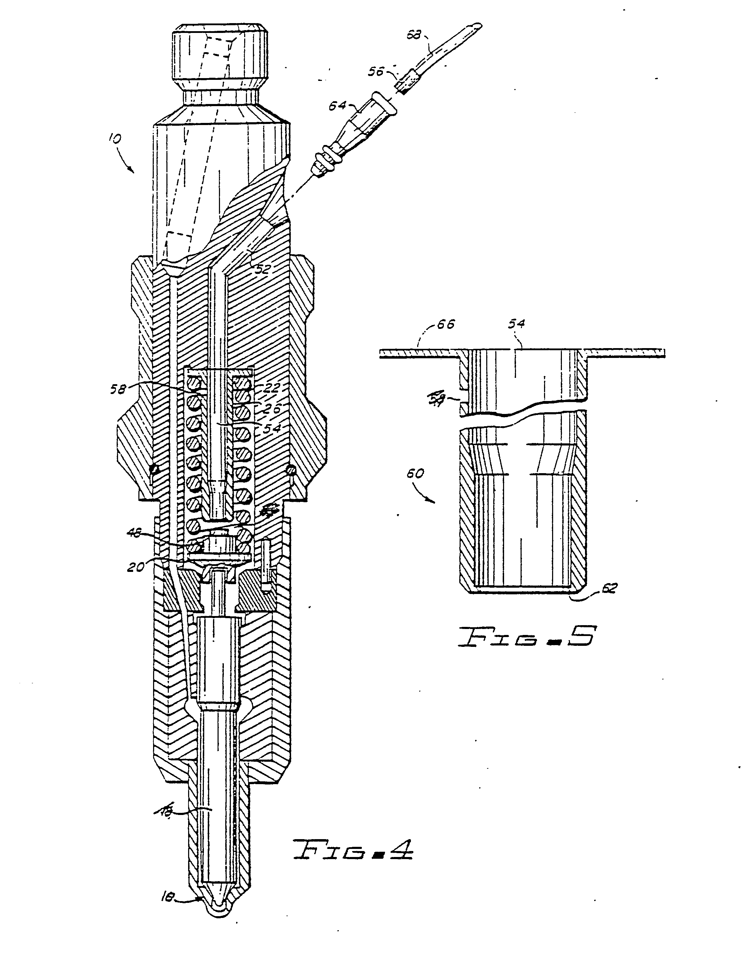

Referring now to FIG. 3, a modified version of the preferred embodiment of the present invention is disclosed. In this embodiment, permanent magnet (48) is coupled to the upper surface of header (32). Upward and downward displacements of spring seat (20) change the magnetic flux density in the vicinity of Hall effect sensor (44) since spring seat (20) is fabricated from a ferromagnetic material. These changes in the flux density cause changes in the output state of sensor (44) in the same manner as that described above in connection with the embodiment illustrated in FIGS. 1 and 2.

FIG. 3 best illustrates that one or more vent holes (50) are positioned in the upper portion of mounting bracket (28). Vent holes (50) permit the free flow of discharge fuel from cavity (26) into fuel discharge passageway (36).

An oscilloscope may be coupled directly to receptacle (40) to monitor the output waveform generated by Hall effect sensor (44). In this manner the timing of the needle valve opening and closing, the duration of injection, or continuous needle position can be monitored. In certain instances it may be desirable to couple a differentiator to receptacle (40) and couple an oscilloscope to the output of the differentiator. The differentiator produces a sharp readily discernable voltage spike when the needle valve either opens or closes.

The needle position indicator of the invention may be included in each of the fuel injectors of an engine or may be included in only a single fuel injector since engine timing can be set by reference to the opening time of only a single needle valve. Alternatively, the needle position indicator of the invention may be included in a fuel injector which is maintained at a maintenance station. Whenever it is necessary to set engine timing, a mechanic can remove the conventional fuel injector from the engine and insert a fuel injector including the needle position indicator of the invention. The engine timing can thus be readily set and monitored by electronic monitoring devices used by the mechanic. Use of the needle position indicator permits engine timing to be set while the engine is running and in addition enables engine timing to be on a continuous basis.

The needle position indicator of the invention may also be coupled to provide a feedback signal for use in a closed loop electronically controlled timing system for a fuel injection system. In another embodiment, the needle position indicator of the invention can be used to monitor wear of fuel injection system components by measuring engine timing changes, particularly at low speed. When the engine timing has changed a predetermined amount as indicated by relative timing of the opening of the needle valve, maintenance personnel can replace the appropriate fuel injection system element to prevent untimely mechanical failure.

It would be apparent to those skilled in the art that the disclosed needle position indicator for a fuel injector may be modified in numerous ways and may assume many embodiments other than the preferred forms specifically set out and described above. For example, the invention can be incorporated in many different configurations of fuel injectors manufactured by many different organizations for use in passenger cars, tractors, trucks, ships, or any other type of diesel engine.

Referring now to FIGS. 4 and 5, a second embodiment of the needle position sensing system will now be described. This embodiment permits a needle position sensing device to be inserted into or removed from cylindrical cavity (26) without having to remove fuel injector (10) from the engine and without having to disassemble fuel injector (10).

In the fuel injector embodiment illustrated in FIG. 4, a sensor passageway (52) is provided. The lower portion of sensor passageway (52) is aligned with the hollow interior of sensor holding means (54). The upper portion of sensor passageway (52) is inclined at an angle to the vertical, causing passageway (52) to intersect the exterior surface of fuel injector (10) at a desired location. Generally, the diameter of both the upper and lower sections of passageway (52) and the diameter of the upper section of sensor holding means (54) will be slightly larger than the diameter of an externally insertable sensing means (56).

An aperture (58) is provided in the upper portion of sensor holding means (54) to permit unpressurized fuel which has leaked into cylindrical cavity (26) to be discharged into the interior of sensor holding means (54). The fuel passing through aperture (58) travels upward through sensor holding means (54) into the lower section of sensor passageway (52). It will be generally desirable to provide a separate fuel leakoff passageway which may be oriented in a place perpendicular to the plane defined by the upper and lower sections of sensor passageway (52). This separate fuel leak-off passageway is not specifically illustrated in FIG. 4, but would extend between sensor passageway (52) and an exterior surface of fuel injector (10). Leak-off fuel would then be coupled via a fuel discharge line back to the engine fuel tank.

The lower section of sensor holding means (54) includes a reduced diameter section indicated generally by reference number (60). The diameter of section (60) is approximately equal to the maximum dimension of needle position sensing means (56). The lower end of sensor holding means (54) includes means for preventing vertical translation of needle position sensor (56) below a predetermined point. In the embodiment illustrated in FIGS. 4 and 5, vertical translation preventing means takes the form of a second reduced diameter section indicated generally by reference number (62) and includes a diameter less than the maximum diameter of needle position sensor (56).

The upper portion of sensor passageway (52) is flared outward and is designed to receive a plug or cap (64). Plug (64) includes a cylindrical lower section which is inserted into the sensor passageway (52) to prevent discharge of any leak-off fuel from this aperture in fuel injector (10). Plug (64) may be manufactured from various different types of material such as rubber, plastic or cork and may assume many different configurations other than the specific configuration illustrated in FIG. 4. It may also be desirable to provide some type of locking means or threads for securely attaching plug (64) to sensor passageway (52). Adaptions or modifications of this type would be well known by those skilled in the art.

As is illustrated in FIG. 4, the outer dimension of sensor holding means (54) is less than the inner diameter of spring (22). A flange (66) is formed by the upper end of sensor holding means (54) and serves to maintain the sensor holder in a fixed position within cavity (26).

In the embodiment illustrated, a magnet (48) of the same type specified for the FIG. 1 embodiment is coupled to the upper surface of spring seat (20) to generate a magnetic field within the interior of cylindrical chamber (26). As was discussed above, it is apparent that magnet (48) could be located at other positions within chamber (26) or alternatively could be coupled within sensing means (56) as is generally suggested by the configuration of the invention illustrated in FIG. 3. In other embodiments, spring seat (20), spring (22) or even other elements of the sensor holder might also be magnetized to provide the necessary magnetic flux density within the interior of cavity (26).

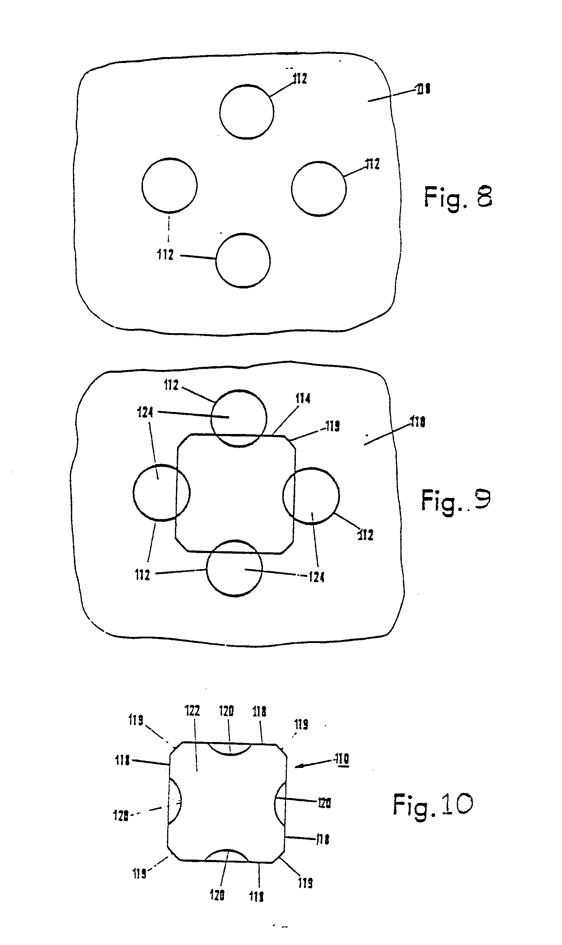

In the embodiment of the invention illustrated in FIG. 4 including magnet (48), the Hall effect sensing means (56) can be fabricated in the manner discussed above in connection with the FIG. 1—3 embodiment or below in connection with the FIG. 8—16 embodiment. The Sprague Electric Company Hall effect sensor described above is also usable in these embodiments of the invention.

A multi-conductor electrical cable (68) is coupled to sensing means (56) and serves a twofold purpose. First, cable (68) provides electrical communication between an indicator unit (such as an oscilloscope) and sensing means (56). Second, cable (68) serves as a tether for sensing means (56) and permits the removal and insertion of sensing means (56) into the desired fixed position in the lower portion of sensor holding means (54). Cable (68) must be sufficiently flexible to flex around the corner formed between the upper and lower elements of sensor passageway (52). On the other hand, cable (68) must be sufficiently stiff to permit the user to externally apply a force which will cause sensing means (56) to be displaced into the appropriate position in the lower portion of sensor holding means (54). As a result of the mechanical vibrations imparted by the engine to fuel injector (10), it may be desirable for the operator to maintain a downward pressure or biasing force on the cable (68) to maintain sensing means (56) firmly in position in the lower portion of sensor holding means (54).

One of the primary advantages of the needle position sensing system described immediately above is a dramatic cost saving in comparison to the non-removable needle positions sensor illustrated in FIGS. 1—3. With the removable needle position sensing system, the comparatively expensive sensor must only be inserted at the specific time when it is desired to adjust engine timing or to otherwise measure or control engine performance. Therefore, a single comparatively expensive sensor can at any time be inserted into or removed from a fuel injector of the type illustrated in FIG. 4.

If on the other hand, sensor (56) forms a part of a closed loop fuel injection system and therefore must be continuously present within fuel injector (10), the removable feature of the present invention permits a defective sensor to readily be removed and replaced. It is thus not necessary to remove and replace the entire fuel injector assembly and thereby break the seal in the high pressure fuel injection system, nor is it necessary to discard an entire fuel injector merely because the sensor has failed. In a closed loop fuel injection system of this type, cable (68) would be routed directly through the center of plug (64) so that plug (64) can be maintained in position in fuel injector (10) while cable (68) and sensor (56) are in position within fuel injector (10).

It will be apparent to those skilled in the art that the disclosed removable needle position sensor system described above may be modified in numerous ways and may assume many embodiments other than the preferred forms specifically set out and described above. For example, needle position sensors not yet invented at the present time may be readily adaptable for use in the present invention or other presently available but excessively large position sensing devices may be miniaturized in the future to a point where they can be inserted into the specially adapted fuel injector described above.

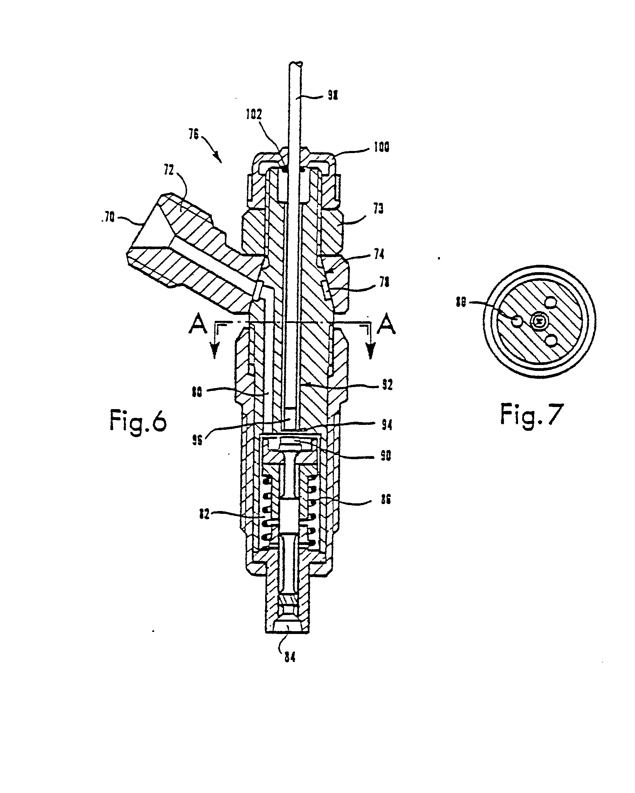

Referring now to FIGS. 6 and 7 of the present invention, a third embodiment is disclosed which is compatible with a poppet fuel injector. FIG. 6 represents an enlarged scale drawing of a miniaturized poppet fuel injector. Lucaus C.A.V. Ltd. manufactures a miniaturized poppet fuel injector of the type illustrated in FIG. 6 under the trademark MICROJECTOR and this type of miniaturized fuel injector has been incorporated in the 5.735 cm$^3$ (350 cubic inch) diesel engines utilized by General Motors in their diesel engines passenger vehicles. Certain structural modifications have been incorporated into this poppet valve as will be recited below. Unmodified, commercially available versions of this poppet fuel injector have a high pressure fuel line coupled to the upper end of the injector body. A cylindrical passageway permits a flow of pressurized fuel through the upper body of the injector into the chamber within which the poppet valve is incorporated.

The poppet fuel injector illustrated in FIG. 6 receives pressurized fuel through a fuel inlet (70). Fuel inlet fitting (72) may be fabricated from steel, such as Armco 17—4PH stainless, and includes a conical section indicated generally by reference number (74). Conical section (74) tightly seals fuel inlet fitting (72) to the body of fuel injector (76). A locking nut (73) maintains fuel inlet fitting (72) in fluid tight contact with the body of fuel injector (76). A circular passageway (78) is cut in the inclined, exterior surface of the body of fuel injector (76) as illustrated in FIG. 6. Passageway (78) communicates with each of three vertically oriented fuel passageways indicated in FIGS. 6 and 7 by reference number (80). The lowermost portion of fuel passageways (80) opens into and communicates with a cavity (82) which houses poppet valve (84). Poppet valve (84) is spring biased in an upward or closed position by spring (86).

A miniature, high power magnet (90), such as a samarium cobalt permanent magnet, is coupled to the upper end surface of poppet valve (84).

A cylindrical passage indicated generally by reference number (92) is drilled vertically downward along the vertical axis of fuel injector (76). The lowermost extension of passageway (92) extends as close as possible to cavity (82). A thin section of metal designated by reference number (94) separates the lowermost extension of passageway (92) from cavity (82). This thin metal section, which in the illustrated embodiment is 0.5 millimeters, also prevents the transfer of high pressure fuel from the interior of cavity (82) into the interior of passageway (92), which is maintained fluid free and at an ambient air pressure.

A valve position sensor (96) is dimensioned to fit within passageway (92) and is coupled to a Teflon wrapped four conductor stranded wire assembly (98). A plastic cap (100) can be removed from fuel injector (76) to permit easy removal and reinsertion of valve position sensor (96) and wire assembly (98) into and out of passageway (92). Valve position sensor (96) carries a retaining ring (102) which is positioned on a wire assembly (98) such that cap (100) exerts a downward pressure on sensor (96) via wire (98) when cap (100) is screwed down against nut (73).

While valve position sensor (96) could take the form of one of a different number of types of proximity sensing devices, inductive or Hall effect sensors can readily be incorporated for use in the disclosed embodiment of the invention. A Hall effect sensor of the type discussed above can be manufactured on a single integrated circuit chip having dimensions of 1.5 by 1.5 millimeters or smaller. A dual cell Hall effect integrated circuit chip measuring 1.245 by 1.270 millimeters is manufactured by the Sprague Electric Company of Concord, Massachusetts. The integrated circuit chip is mounted on a ceramic header having a diameter of 2.2 millimeters. The entire Hall effect sensor assembly is epoxy encapsulated.

With a Hall effect device being incorporated within valve position sensor (96), it is important to fabricate the body of fuel injector (76) from a material which will not become magnetized during fabrication. Nitronic 60 stainless steel has been utilized in the preferred embodiment of the invention since this particular steel alloy has the required anti-magnetic property.

In operation, poppet valve (84) is mechanically displaced between open and closed portions as a result of fuel pressure overcoming the biasing force exerted by biasing spring (86). Since magnet (90) is coupled to the upper end of poppet (84), the up and down displacements of magnet (90) within cavity (82) modify the magnetic flux density which is sensed by valve position sensor (96). These changes in magnetic flux density are converted into varying electrical output signals which are coupled to an externally positioned read-out device such as an oscilloscope by wire assembly (98).

The thin area of non-magnetic stainless steel designated by reference number (94) contains the pressurized fuel within chamber (82), but permits the passage of magnetic flux generated by magnet (90) into the area within passageway (92) which is occupied by valve position sensor (96). Valve position sensor (96) is thus subject only to ambient air pressure and does not have to be specially adapted to function within a high pressure region nor are special sealing techniques required to prevent the leakage of high pressure fuel from the area in which the sensor is located.

It will be apparent to those skilled in the art that the disclosed valve position sensor for a poppet fuel injector may be modified in numerous ways and may assume many embodiments other than the preferred forms specifically set out and described above. For example, the present invention can be incorporated in many different configurations of fuel injector valves as long as the existing structure of the valve or an alternative restructured valve design can be implemented which permits a passageway to be bored within the fuel injector from an exterior surface into close proximity to the displaceable portion of the injector valve. Cylindrical passageway (92) could be accessed at a 30 degree angle as shown in FIG. 4 and the sensor inserted through a 30 degree passage. In that case the fuel inlet would be centrally located as in FIG. 4.

A detailed description of another embodiment of the present invention will now be described with reference to FIGS. 8—16.

The sensor employs an insulating header, the various features of which are best described with respect to its manufacture. Noting FIGS. 8—10, manufacture is initiated with a strip (110) of an insulating material, such as alumina, through which spaced holes (112) are punched. It will be understood that a number of units may be manufactured simultaneously with known microcircuit technology from the same strip of insulating material. However, in FIGS. 8 and 9, only the manufacture of a single header is shown.

After the punching of the holes (112), the strip (110) is subjected to conventional cutting and metallizing operations to define the desired header usable for insertion into a fuel injection system. The resulting header structure (110) shown in FIG. 10 has four equal sides (118), and four vias (120) each having metallization (124) therein. The cut (114) (FIG. 9) defines four radial corners (119), the purpose of which will be described below. As thus manufactured, the header (110) of FIG. 10 is adapted for further operations to manufacture a sensor specifically for use with fuel injection apparatus in an internal combustion engine.

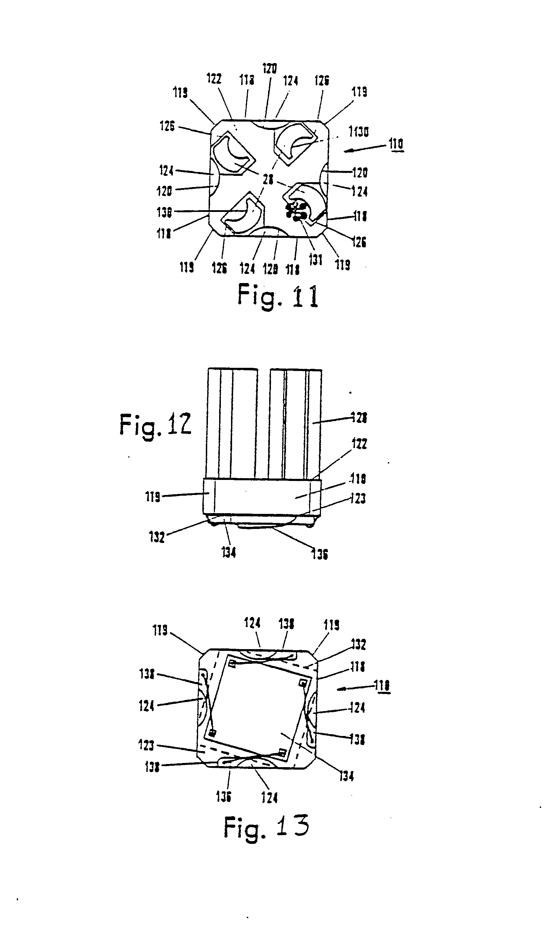

Noting FIGS. 11, 12, and 13, the upper surface (122) of the header (110) is provided with four metallized pads (126) in contact with the metallization (124) in the vias (120). These metal pads (126) may be deposited by known metallization deposit techniques. Four rigid metal pins (128), preferably formed of a steel alloy such as Kovar, are each brazed to one of the metallized pads (126) on the first surface (122). Preferably, each pin (128) includes a groove (130) therein permitting the location of stripped ends (131) of flexible strands of an insulated multi-strand lead wire (131) to be welded to each pin (128) in the groove (130). While only one of the wires (131) is shown in the groove (130) of a single rigid pin (128) in FIG. 10, it will be understood that a flexible wire is connected to each of the pins (128).

Reference is now made to FIGS. 12 and 13. Metallization pads (138) are likewise deposited on the opposing surface (123) of the header (110). An insulating layer (132), preferably also of alumina, is deposited on that surface (123). A Hall effect detector chip (134) is bonded to the insulating layer (132) and carried by the surface (123) of the header (110). Connecting bond wires (136) interconnect each metallization pad (138) with a corresponding pad on the Hall effect chip (134).

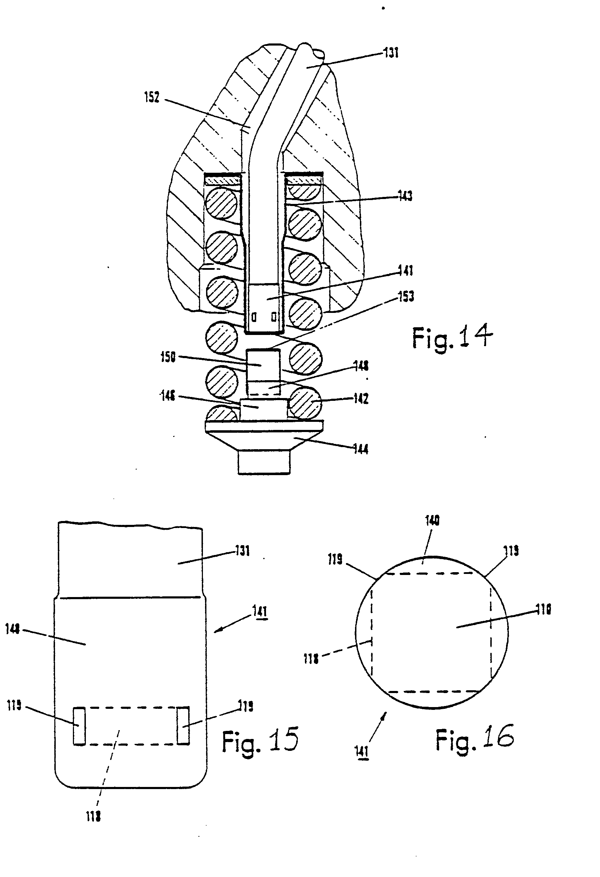

As shown in FIGS. 15 and 16, the sensor (141) includes an encapsulating resin (140) which is shaped as a cylinder with the periphery thereof lying flush with the radial corners (119). The corners (119) may engage the hold sides during encapsulation, and the corners (119) and encapsulation (140) in turn serve as a guide for the entire sensor (141) as it is inserted through a central passageway (152) (FIG. 14) of a fuel injector. A typical passageway through which the sensor (141) of this invention may be inserted includes the passageway (52) shown in FIG. 4 above.

FIG. 14 illustrates the sensor (141) fitted in the passageway (152) corresponding to the passageway (52) in FIG. 4. The sensor (141) is positioned in the bottom of that passageway (152) in a holder (143) of a non-magnetic material, preferably stainless steel. The fuel injector includes a nozzle holder spring (142) and a spring seat (144) in FIG. 14. The seat (144) includes a spring centering plug (146) having a smaller diameter extension (148) thereon. A samarium cobalt magnet (150) is positioned on top of the extension (148). A non-magnetic cap (153), preferably formed of stainless steel, is fitted over the magnet (150), and is welded or brazed to the periphery of the extension (148). The magnet (150) may be fixed within the cavity of the cap (152) with a suitable potting compound.

There has thus been described a unique and facile sensor for detecting the opening of a fuel injection valve to improve engine efficiency and minimize engine emissions.

## Claims

1. A fuel injector for delivering fuel to an internal combustion engine, including a fuel injector body incorporating a needle valve (18) or poppet valve (84) displaceable between closed and open positions for controlling fuel delivery, which needle valve (18) or poppet valve (84) is housed in a chamber (82) in the injector body and biased towards the closed position by biasing means (22, 86, 142) located in the chamber, and means for sensing the position of the needle valve or poppet valve, which position sensing means includes a Hall effect sensor (44, 56, 96, 134, 141), characterised in that a passageway (36, 52, 92, 152) extends in the body to open at one end (42) to the exterior thereof and either to open at the other end into a tubular holder (28, 54, 143) provided in axial extension of the other passageway end opening into the chamber (26) or to terminate short of and immediately adjacent to the chamber (82), and the Hall effect sensor (44, 56, 96, 134, 141) is either located in said holder (28, 54, 143) or located in the passageway (92) at the end (94) thereof terminating short of and immediately adjacent to the chamber (82).

2. A fuel injector according to claim 1, wherein said biasing means includes a spring (22, 86, 142) having upper and lower ends.

3. A fuel injector according to claim 2, wherein said spring (22, 142) is a helically wound spring which forms a generally cylindrical spring cavity (24).

4. A fuel injector according to claim 3, wherein said tubular sensor holder (28, 54, 143) is positioned within the spring cavity (24).

5. A fuel injector according to claim 1, including a magnet (48, 150 or 90) moving in synchronization with said needle valve (18) or said poppet valve (84).

6. A fuel injector according to any one of claims 1 to 5, wherein the passageway (52, 154) and Hall effect sensor (56, 134, 141) are dimensioned so that the Hall effect sensor can be passed into and along said passageway (52, 152) into the biasing means in the chamber (26), and into the tubular sensor holder (28, 54, 143) and vice versa.

7. A fuel injector according to any one of claims 1 to 6, wherein the tubular sensor holder (54) has a first reduced diameter section (60) within a lower portion of said tubular sensor holder (54) wherein the diameter of said reduced diameter section (60) is approximately equal to the maximum dimension of said Hall effect sensor (56), a second reduced diameter section (62) adjacent the lower end of said sensor holder (54) and having a diameter less than the maximum diameter of said Hall effect sensor (56), and a closed lower end.

8. A fuel injector according to any one of claims 1 to 7, wherein the Hall effect sensor (44, 56, 96, 134, 141) includes a header (32, 110) of an electrically insulating material having opposing first and second surfaces, plural conductive leads (34, 131, 136) each separately coupled to said first surface of said header (32, 110), the Hall effect sensing means (44, 134) mounted upon said second surface, metallization means (124, 138) between said first and second surfaces for interconnecting said leads (34, 131, 136) with said sensing means (44, 134), encapsulating means (46, 140) about said header (32, 110) leads (34, 131, 136) and sensing means (44, 134); and wherein said encapsulated sensor is dimensioned for insertion into and out of the passageway (52, 92, 152).

9. A fuel injector according to any one of claims 1 to 7, wherein the Hall effect sensor (44, 56, 96, 134, 141) is removable and dimensioned to pass through said passageway (52, 92, 152), said Hall effect sensor (44, 56, 96, 134, 141) comprising the insulating header (32, 110) having radial guide corners (119) flush with the outer periphery of said encapsulating material (140).

10. A fuel injector according to claim 9, wherein said Hall effect sensor (44, 56, 96, 134, 141) includes conductive means including rigid pins (128) extending outward from said header (110) when said sensor is positioned in said passageway (52, 92, 152).

11. A fuel injector according to claim 10, wherein said conductive means includes flexible, insulated lead wires (131), each joined with a corresponding one of said rigid pins (128) and adapted to extend out of said passageway (52, 92, 152) when said sensor is positioned within said passageway.

12. A fuel injector according to claim 10 or claim 11, wherein said header (110) comprises first and second opposed surfaces, with said radial corners (119) extending substantially normal to said surfaces.

13. A fuel injector according to claim 12, wherein said rigid pins (128) are brazed to said header (110) at said first surface.

14. A fuel injector according to claim 13, wherein said Hall effect sensor (44, 56, 96, 134, 141) includes a magnetic detector (134) upon said second surface (123).

15. A fuel injector according to claim 14, including metallization means between said first and second surfaces for conductive connection between said pins (128) and said detector (134).

16. A fuel injector according to claim 15, including an encapsulating material (140) surrounding said header (110) and covering said conductive connections.

17. A fuel injector according to claim 16, having conductive means including flexible lead wires (131) coupled with the rigid pins (128) and extending outwardly from the header (32, 110) when the Hall effect sensor is positioned in the passageway.

18. A fuel injector according to claim 17 including a non-magnetic cap (153) over the magnet (150).

**Patentansprüche**

1. Kraftstoffinjektor für die Kraftstoffzufuhr zu einem Verbrennungsmotor mit einem Kraftstoffinjektoraufbau mit einem Nadelventil (18) oder Tellerventil (84), welches zwischen geschlossenen und offenen Stellungen zur Steuerung der Kraftstoffzufuhr verschiebbar ist, wobei das Nadelventil (18) oder Tellerventil (84) in einer Kammer (82) im Injektoraufbau untergebracht und durch in der Kammer angeordnete Vorspanneinrichtungen (22, 86, 142) zu der geschlossenen Stellung hin vorgespannt ist, Einrichtungen zum Abfühlen der Stellung des Nadelventils oder Tellerventils vorgesehen sind und die Positionsabfühleinrichtung einen Halleffekt-Sensor (44, 56, 96, 134, 141) aufweist, dadurch gekennzeichnet, daß sich ein Durchgang (36, 52, 92, 152) in dem Aufbau erstreckt, um sich an einem Ende (42) nach außerhalb des Aufbaues hin zu öffnen und sich entweder am anderen Ende in einen rohrförmigen Halter (28, 54, 143) hinein zu öffnen, der in axialer Erstreckung des anderen Durchgangsendes vorgesehen ist, welches sich in die Kammer (26) hinein öffnet, oder kurz vor der Kammer (82) und unmittelbar neben derselben zu enden, und daß der Halleffekt-Sensor (44, 56, 96, 134, 141) entweder in dem Halter (28, 54, 143) angeordnet ist oder im Durchgang (92) an seinem Ende (94) angeordnet ist, welches kurz vor der Kammer (82) und unmittelbar neben dieser endet.

2. Kraftstoffinjektor nach Anspruch 1, wobei die Vorspanneinrichtung eine Feder (22, 86, 142) mit oberen und unteren Enden aufweist.

3. Kraftstoffinjektor nach Anspruch 2, wobei die Feder (22, 142) eine schraubenförmig gewickelte Feder ist, die einen im allgemeinen zylindrischen Federhohlraum (24) bildet.

4. Kraftstoffinjektor nach Anspruch 3, wobei der rohrförmige Sensorhalter (28, 54, 143) innerhalb des Federhohlraumes (24) angeordnet ist.

5. Kraftstoffinjektor nach Anspruch 1 mit einem Magnet (48, 150 oder 90), der sich synchron zu dem Nadelventil (18) oder dem Tellerventil (84) bewegt.

6. Kraftstoffinjektor nach einem der Ansprüche 1 bis 5, wobei der Durchgang (52, 154) und der Halleffekt-Sensor (56, 134, 141) derart bemessen sind, daß der Halleffekt-Sensor in den Durchgang (52, 152) und entlang diesem in die Vorspanneinrichtung in der Kammer (26) hinein und in den rohrförmigen Sensorhalter (28, 54, 143) und umgekehrt eingeführt werden kann.

7. Kraftstoffinjektor nach einem der Ansprüche 1 bis 6, wobei der rohrförmige Sensorhalter (54) einen ersten Abschnitt (60) verringerten Durchmessers innerhalb eines unteren Teiles des rohrförmigen Sensorhalters (54) hat, wobei der Durchmesser des Abschnittes (60) mit verringertem Durchmesser etwa gleich dem Maximalmaß des Halleffekt-Sensors (56) ist, einen zweiten Abschnitt (62) verringerten Durchmessers neben dem unteren Ende des Sensorhalters (54) hat, wobei der Abschnittsdurchmesser kleiner als der maximale Durchmesser des Halleffekt-Sensors (56) ist, und ein geschlossenes unteres Ende hat.

8. Kraftstoffinjektor nach einem der Ansprüche 1 bis 7, wobei der Halleffekt-Sensor (44, 56, 96, 134, 141) einen Verteiler (32, 110) aus elektrisch isolierendem Material mit gegenüberliegenden ersten und zweiten Oberflachen, mehrerer Leitungsdrähte (34, 131, 136) aufweist, deren jeder getrennt mit der ersten Oberfläche des Verteilers (32, 110) gekuppelt ist, daß die Halleffektabfühleinrichtung (44, 134) auf der zweiten Oberfläche angebracht ist, Metallbedampfungseinrichtungen (124, 138) zwischen der ersten und zweiten Oberfläche für die Verbindung der Drähte (34, 131, 136) mit der Abfühleinrichtung (44, 134) aufweist, um Kapselungseinrichtungen (46, 140) um den Verteiler (32, 110), die Drähte (34, 131, 136) und die Abfühleinrichtung (44, 134) aufweist; und wobei der umkapselte Sensor zum Einführen in den Durchgang (52, 92, 152) hinein und aus diesem heraus bemessen ist.

9. Kraftstoffinjektor nach einem der Ansprüche 1 bis 7, wobei der Halleffekt-Sensor (44, 56, 96, 134, 141) entfernbar und so bemessen ist, daß er durch den Durchgang (52, 92, 152) hindurchgeht, wobei der Halleffekt-Sensor (44, 56, 96, 134, 141) mit dem Isolierverteiler (32, 110) radiale Führungsecken (119) aufweist, die mit dem Außenumfang des umkapselten Materials (140) bündig sind.

10. Kraftstoffinjektor nach Anspruch 9, wobei der Halleffekt-Sensor (44, 56, 96, 134, 141) Leitungseinrichtungen mit starren Stiften (128) aufweist, die sich von dem Verteiler (110) nach außen erstrecken, wenn der Sensor in dem Durchgang (52, 92, 152) angeordnet ist.

11. Kraftstoffinjektor nach Anspruch 10, wobei die Leitungseinrichtung flexible, isolierte Leitungsdrähte (131) aufweist, deren jeder mit einem entsprechenden starren Stift (128) verbunden und geeignet derart ausgestaltet ist, daß er sich aus dem Durchgang (52, 92, 152) herauserstreckt, wenn der Sensor im Durchgang angeordnet ist.

12. Kraftstoffinjektor nach Anspruch 10 oder Anspruch 11, wobei der Verteiler (110) erste und zweite gegenüberliegende Oberflächen aufweist, wobei die radialen Ecken (119) sich im wesentlichen senkrecht zu den Oberflächen erstrecken.

13. Kraftstoffinjektor nach Anspruch 12, wobei die starren Stifte (128) am Verteiler (110) an der ersten Oberfläche durch Hartlötung angebracht sind.

14. Kraftstoffinjektor nach Anspruch 13, wobei der Halleffekt-Sensor (44, 56, 96, 134, 141) einen magnetischen Detektor (134) auf der zweiten Oberfläche (123) aufweist.

15. Kraftstoffinjektor nach Anspruch 14 mit Metallbedampfungseinrichtungen zwischen der ersten und der zweiten Oberfläche für die leitende Verbindung zwischen den Stiften (128) und dem Detektor (134).

16. Kraftstoffinjektor nach Anspruch 15 mit einem Umkapselungsmaterial (140), welches den Verteiler (10) umgibt, und die Leitungsverbindungen bedeckt.

17. Kraftstoffinjektor nach Anspruch 16 mit Leitungseinrichtungen, welche flexible Leitungsdrähte (131) aufweisen, die an den starren Stiften (128) gekuppelt sind und sich vom Verteiler (32, 110) nach außen erstrecken, wenn der Halleffekt-Sensor im Durchgang angeordnet ist.

18. Kraftstoffinjektor nach Anspruch 17 mit einer nichtmagnetischen Kappe (153) über dem Magnet (150).

**Revendications**

1. Un injecteur de carburant destiné à dis-bribuer du carburant à un moteur à combustion interne, comprenant un corps d'injecteur de carburant qui comporte une soupape à aiguille (18) ou une soupape champignon (84) pouvant être déplacée entre des positions fermée et ouverte pour commander la distribution du carburant, cette soupape à aiguille (18) ou soupape champignon (84) étant logée dans une chambre (82) dans le corps de l'injecteur et sollicitée vers la position fermée par des moyens de positionnement (22, 86, 142) qui se trouvent dans la chambre, et des moyens destinés à détecter la position de la soupape à aiguille ou de la soupape champignon, ces moyens de détection de position comprenant un capteur à effet Hall (44, 56, 96, 134, 141), caractérisé en ce qu'un passage (36, 52, 92, 152) s'étend dans le corps de façon à s'ouvrir à une extrémité (42) à l'extérieur du corps, et soit à s'ouvrir à l'autre extrémité dans un support tubulaire (28, 54, 143) placé en prolongement axial de l'autre extrémité du passage et s'ouvrant dans la chambre (26), soit à se terminer avant la chambre (82) et en position immédiatement adjacente à cette dernière, et le capteur à effet Hall (44, 56, 96, 134, 141) est soit placé dans le support (28, 54, 143) soit placé dans le passage (92), à l'extrémité (94) de ce dernier qui se termine avant la chambre (82) et en position immédiatement adjacente à cette dernière.

2. Un injecteur de carburant selon la revendication 1, dans lequel les moyens de positionnement comprennent un ressort (22, 86, 142) ayant des extrémités supérieure et inférieure.

3. Un injecteur de carburant selon la revendication 2, dans lequel le ressort (22, 142) est un ressort hélicoïdal qui forme une cavité de ressort (24) de forme générale cylindrique.

4. Un injecteur de carburant selon la revendication 3, dans lequel le support de capteur tubulaire (28, 54, 143) est placé à l'intérieur de la cavité de ressort.

5. Un injecteur de carburant selon la revendication 1, comprenant un aimant (48, 150 ou 90) qui se déplace en synchronisme avec la soupape à aiguille (18) ou la soupape champignon (84).

6. Un injecteur de carburant selon l'une quelconque des revendications 1 à 5, dans lequel le passage (52, 154) et le capteur à effet Hall (56, 134, 141) sont dimensionnés de façon qu'on puisse faire passer le capteur à effet Hall dans le passage (52, 152), pour l'amener dans les moyens de positionnement situés dans la chambre (26) et dans le support de capteur tubulaire (28, 54, 143), et qu'on puisse le faire sortir par le même chemin.

7. Un injecteur de carburant selon l'une quelconque des revendications 1 à 6, dans lequel le support de capteur tubulaire (54) comporte une première section de diamètre réduit (60), dans une partie inférieure du support de capteur tubulaire (54), le diamètre de cette section de diamètre réduit (60) étant approximativement égal à la dimension maximale du capteur à effet Hall (56), une seconde section de diamètre réduit (62) adjacente à l'extrémité inférieur du support de capteur (54) et ayant un diamètre inférieur au diamètre maximal du capteur à effet Hall (56), et une extrémité inférieure fermée.

8. Un injecteur de carburant selon l'une quelconque des revendications 1 à 7, dans lequel le capteur à effet Hall (44, 56, 96, 134, 141) comprend une embase (32, 110) en une matière électriquement isolante, ayant des première et seconde surfaces opposées, plusieurs conducteurs (34, 131, 136), chacun d'eux étant connecté séparément à la première surface de l'embase (32, 110), les moyens de détection à effet Hall (44, 134) étant montés sur la seconde surface, des moyens de métallisation (124, 138) entre les première et seconde surfaces, dans le but d'interconnecter les conducteurs (34, 131, 136) et les moyens de détection (44, 134), des moyens d'encapsulation (46, 140) autour de l'embase (32, 110), des conducteurs (34, 131, 136) et des moyens de détection; et dans lequel le capteur encapsulé est dimensionné de façon à pouvoir être introduit dans le passage (52, 92, 152) et extrait de celui-ci.

9. Un injecteur de carburant selon l'une quelconque des revendications 1 à 7, dans lequel le capteur à effet Hall (44, 56, 96, 134, 141) est amovible et il est dimensionné de façon à passer à travers le passage (52, 92, 152), ce capteur à effet Hall (44, 56, 96, 134, 141) comprenant l'embase isolante (32, 110) ayant des points de guidage radiaux (119) qui affleurent la périphérie extérieure de la matière d'encapsulation (140).

10. Un injecteur de carburant selon la revendication 9, dans lequel le capteur à effet Hall (44, 56, 96, 134, 141) comporte des moyens conducteurs comprenant des broches rigides (128) qui s'étendent vers l'extérieur à partir de l'embase (110) lorsque le capteur est positionné dans le passage (52, 92, 152).

11. Un injecteur de carburant selon la revendication 10, dans lequel les moyens conducteurs comprennent des fils conducteurs isolés et flexibles (131), chacun d'eux étant relié à l'une correspondante des broches rigides (128) et disposé de façon à s'étendre jusqu'à l'extérieur du passage (52, 92, 152) lorsque le capteur est positionné dans ce passage.

12. Un injecteur de carburant selon la revendication 10 ou la revendication 11, dans lequel l'embase (110) comprend des première et seconde surfaces opposées, avec les coins radiaux (119) s'étendant dans une direction pratiquement normale à ces surfaces.

13. Un injecteur de carburant selon la revendication 12, dans lequel les broches rigides (128) sont brasées sur la première surface de l'embase (110).

14. Un injecteur de carburant selon la revendication 13, dans lequel le capteur à effet Hall (44, 56, 96, 134, 141) comprend un détecteur magnétique (134) sur la seconde surface (123).

15. Un injecteur de carburant selon la revendication 14, comprenant des moyens de métallisation entre les première et seconde surfaces, destinés à établir une connexion conductrice entre les broches (128) et le détecteur (134).

16. Un injecteur de carburant selon la revendication 15, comprenant une matière d'encapsulation (140) qui entoure l'embase (110) et qui recouvre les connexions conductrices.

17. Un injecteur de carburant selon la revendication 16, comportant des moyens conducteurs qui comprennent des fils conducteurs flexibles (131) connectés aux broches rigides (128) et s'étendant vers l'extérieur à partir de l'embase (32, 110) lorsque le capteur à effet Hall est placé dans le passage.

18. Un injecteur de carburant selon la revendication 17, comprenant un capuchon non magnétique (153) placé sur l'aimant (150).

FIG-1

FIG-2

FIG-3

0 059 733

FIG-4

FIG-5

Fig.6

Fig.7

Fig. 8

Fig.. 9

Fig. 10

Fig. 11

Fig. 12

Fig. 13

0 059 733

Fig.14

Fig. 15

Fig.16